# EUROPÄISCHE PATENTSCHRIFT

(11) **EP 0 951 817 B1**
(45) Veröffentlichungstag und Bekanntmachung des Hinweises auf die Patenterteilung: **28.08.2002**
(21) Anmeldenummer: 99107530.0
(22) Anmeldetag: 15.04.1999
(51) Int. Cl.: A01D 45/16

(54) **Tabakerntemaschine**
Tobacco harvester
Machine à récolter le tabac

(30) Priorität: 21.04.1998 DE 19817609
(43) Veröffentlichungstag der Anmeldung: 27.10.1999
(73) Patentinhaber: Knoll, Leo, 76863 Herxheimweyher (DE)
(72) Erfinder: Knoll, Leo, 76863 Herxheimweyher (DE)
(74) Vertreter: Pietruk, Claus Peter, Dipl.-Phys.

(56) Entgegenhaltungen:
- US-A- 2 696 069
- US-A- 3 992 860
- US-A- 4 023 331
- US-A- 4 073 124
- US-A- 4 176 509
- US-A- 4 285 189
- US-A- 4 715 170

## Beschreibung

Die Erfindung betrifft eine Tabakerntemaschine mit sich in Fahrtrichtung nach vorne öffnenden Führungen für Tabakstöcke mit abzuerntenden Tabakblättern und einer Vorrichtung zum Abtrennen erntereifer Tabakblätter von zwischen den Führungen befindlichen Tabakstöcken sowie ein Verfahren zur Ernte von Pflanzenblättern nach dem Oberbegriff des unabhängigen Verfahrensanspruches.

Tabakpflanzen erreichen Höhen von etwa 170 cm bis 200 cm und haben einen Stengeldurchmesser von typisch 3 cm bis 6 cm. Am Stengel wachsen von unten nach oben sortenabhängig drei bis vier bodennahe Grumpenblätter, drei bis fünf Sandblätter, vier bis sieben Blatt Hauptgut und zwei bis vier Blätter Obergut. Darüber wachsen die als Geize bezeichneten seitlichen Triebe und die Blüten.

Die in unterschiedlichen Höhen wachsenden Blätter unterscheiden sich nicht nur in ihren Eigenschaften wie dem Nikotingehalt und dem Aroma, sondern sind auch zu unterschiedlichen Zeiten reif; die bodennahen Blätter sind dabei zuerst erntereif.

Die Abnehmer der Tabakblätter fordern häufig, daß die an ein und derselben Pflanze reifenden Blätter zu unterschiedlichen Zeiten geerntet werden. In einem solchen Fall ist es erforderlich, zunächst die unteren Blätter zu entfernen, ohne die höher wachsenden, noch unreifen zu beschädigen. Je nach Höhe über Grund müssen bei einer Erntestufe, also zu einem Erntezeitpunkt die Blätter über einen Höhenbereich von etwa 15 bis zu ca. 80 cm abgeerntet werden.

Während bei der Tabaksorte "Virgin" eine Ofentrocknung erfolgt, werden die Tabakblätter der Sorten "Burley" und "Geudertsheimer" nach der Ernte auf Schnüre aufgezogen ("eingenäht") und zur Luft-Trocknung in Schuppen bzw. Scheunen gehängt. Wenigstens bei den beiden letztgenannten Sorten soll die Ernte daher so erfolgen, daß das nachfolgende Auffädeln der Blätter für die nachfolgende Trocknung leicht möglich ist. Dies erfordert insbesondere eine schonende Entfernung der Blätter vom Tabakstock.

Die Erntevorrichtung muß zugleich so dimensioniert sein, daß sie in dicht nebeneinander liegenden Pflanzen-Reihen einsetzbar ist, da zu weite Reihenabstände (über ca. 80 cm) nicht nur die Flächennutzung und somit den Ernteertrag senken, sondern zugleich durch die geänderten Wachstumsbedingungen die Tabakqualität senken. Bevorzugt sind Reihenabstände um oder unter 75 cm.

Es gibt bereits Maschinen, bei denen von Hand geerntete Tabakblätter mit einem Förderband in eine Höhe oberhalb der Pflanze transportiert werden. Dort befindet sich eine Arbeitsfläche, wo die Blätter von Hand weiter verarbeitet werden.

Weiter ist aus der US-PS 4,715,170 eine Vorrichtung nach dem Oberbegriff des Anspruch 1 bekannt. Die bekannte Anordnung schädigt bei der Ernte aber erfahrungsgemäß einerseits den Tabakstock und andererseits die Tabakblätter und führt so zu erheblichen Beeinträchtigungen der Erntemenge insbesondere bei "Burley-" und "Geudertsheimer-" Tabak.

Aus der US-PS 4,285,189, die den nächstliegenden Stand der Technik zur vorliegenden Anmeldung darstellt, ist bereits bekannt, einen Tabakstock zwischen Führungen einzuspannen und den eingespannten Tabakstock abzuernten. In der US-PS 4,285,189 wird vorgeschlagen, schlaff herabhängende Blätter vor Eintritt des Tabakstockes zwischen die Führungen mit einem Bürstenpaar anzuheben.

Die Aufgabe der vorliegenden Erfindung besteht darin, eine Tabakerntemaschine bereitzustellen, bei welcher die Gefahr einer Tabakpflanzenbeschädigung trotz hoher Erntegeschwindigkeit weiter verringert ist.

Die Lösung der Aufgabe wird unabhängig beansprucht. Bevorzugte Ausführungsformen sind in den abhängigen Ansprüchen definiert.

Es wird demnach vorgeschlagen, daß bei einer Erntemaschine der eingangs genannten Art eine Vorerntevorrichtung vor der Eintrittsmündung angebracht ist, um im Höhenbereich der Führung vorhandene Tabakblätter vor Eintritt des Tabakstockes zwischen die Führung schonend abzuernten.

Der Erfinder hat erkannt, daß die Führung eines Tabakstockes während des Blatterntevorganges zwar vorteilhaft ist, aber die im Bereich der Führung liegenden Blätter oftmals beschädigt werden oder unter Beschädigung des Tabakstockes abgerissen werden. Es wird daher vorgeschlagen, den Tabakstock für die Ernte zwischen der Führung durch eine Vorernte unmittelbar vor Eintritt des Tabakstockes in die Führung vorzubereiten. Mit dieser Vorernte wird am Stengel schonend Raum geschaffen für die Führung und den Antrieb der nachfolgenden Abtrenneinrichtung. Dies ermöglicht es, mit dieser Abtrenneinrichtung die Blätter schnell abzutrennen, was die Erntegeschwindigkeit erhöht.

Die Führungen liegen bevorzugt elastisch an dem oder jedem geführten Tabakstock vorzugsweise klemmend an. Die Elastizität verhindert, daß die Tabakstöcke durch harte Kanten einer Führung beschädigt werden und die Klemmung trägt zu einer sichereren und beschädigungsfreien Führung während der Ernte bei.

Beide Maßnahmen erhöhen die mögliche Erntegeschwindigkeit und tragen zur Schonung der Tabakernte bei.

Zudem sollen sich die Führungen an den Führungsstellen relativ zum Tabakstock bevorzugt langsamer bewegen als der Tabakstock zur Erntemaschine oder ganz zum Tabakstock ruhen. Dies verhindert, daß der Tabakstock durch die Führung oberflächlich abgeschabt wird. Bei einer bevorzugten bauliche Ausgestaltung ist hierfür die Führung durch jeweils mindestens einen etwa horizontal verlaufenden Riemen definiert, der allgemein parallel zur Fahrtrichtung zwischen liegenden Umlenkrollen gespannt ist. Der zwischen die Riemen elastisch geklemmte Stock kann den Riemen mitnehmen, wobei sich die Umlenkrollen auf beiden Seiten des Tabakstockes gegenläufig drehen. Hier bewegt sich im Eingangsbereich der Tabakstock zur Führung nur langsam und ruht relativ zum Riemen, wenn er vollständig eingeklemmt ist. Für Tabaksorten, deren Blätter vom Tabakstock weg steil nach oben wachsen, kann es erwünscht sein, die Umlenkrollen entsprechend dem Wuchswinkel anzustellen. So kann die durch Vorernte freizuräumende Zone klein bleiben.

Die Führung hat bevorzugt eine Länge, die eine gleichzeitige Aufnahme von maximal zwei Tabakstöcken in Reihe hintereinander ermöglicht. Bei typischen Pflanzenabständen von 45 bis 50 cm entspricht dies einer Führungslänge von ca. 50 bis 80 cm, bevorzugt etwa 60 cm.

Ist die Führung länger, kann sich die Erntemaschine nicht im gewünschten Maß zu den Tabakstöcken ausrichten; ist die Führung kürzer, ist nicht genügend Platz für schonend arbeitende Abtrenneinrichtungen vorhanden.

Die Tabakerntemaschine weist bevorzugt wenigstens einen Drehzylinder unterhalb der Führung auf, der insbesondere auf seiner Mantelfläche eine schräg verlaufenden, hinreichend breiten Abstreifsteg aufweist und in Fahrtrichtung vorne am Rahmen angelenkt ist, also gegen den Tabakstock gezogen wird. Er ist zur Mitte zwischen den Führungen, also gegen den Tabakstock vorgespannt, was einen hinreichend kräftigen Andruck der Abstreifkante gegen den Tabakstock gewährleistet. Der angelenkte Drehzylinder kann den Tabakstock partiell umlaufen. Dabei dreht er sich am Tabakstock in Fahrtrichtung, also gegen den an ihm vorbeibewegten Tabakstock. Durch die beidseits der Führungen vorgesehene Drehzylinder wird eine ganzseitige Abernte des Tabakstockes erreicht.

Als Vorerntevorrichtung dient bevorzugt ein rotierendes, mit sternförmig abstehenden Abstreiffingern versehenes Rad, das in einem Winkel von 20° bis 35° gegen die Fahrtrichtung und in einem Winkel von 40° bis 50° gegen den Boden geneigt sein kann. Alternativ ist eine Winkelausrichtung von 40° bis 50° gegen Fahrtrichtung und 20° bis 35° gegen Boden möglich. Der Durchmesser des Rades ist so gewählt, daß es bei gegebener Anstellung einen für die Führung und den Antrieb der Haupterntevorrichtung ausreichenden Höhenbereich von z.B. 25cm freiräumt. Durch axial vor- und zurückfedernde Lagerung wird verhindert, daß das Rad den Tabakstock beschädigt. Die sternförmig abstehenden Abstreiffinger des sich drehenden Rades greifen bei Annäherung an den Tabakstock an, wobei die federnde Lagerung eine Beschädigung des Tabakstockes vermeidet, auch wenn das Rad schneller angetrieben wird, als es der Bewegung über Grund entspricht und so den Tabakstock heranzieht. Dies gilt selbst dann, wenn die Tabakstöcke und/oder die Blattrippen etwa kurz nach einem Niederschlag oder im morgendlich taunassen Feld noch "glasig" sind und schon bei geringem Druck in mehrere Teile zerspringen, Die rotierenden Abstreiffinger entfernen dank ihrer eingewinkelten Stellung in einer den Tabakstock sichelförmig umfahrenden Bewegung von drei Seiten des Tabakstockes die Blätter.

Während auf der gegenüberliegenden Seite ebenfalls ein mit sternförmig abstehenden Abstreiffingern versehenes Rad angeordnet werden kann, kann der Aufbau durch Anordnung nur eines einfachen, ebenfalls in einem Winkel von 30° bis 45° gegen die Fahrtrichtung und 20° bis 35° gegen den Boden geneigten Rades vereinfacht und die Herstellungskosten so vermindert werden. Ein solches einfaches Rad, welches lediglich die verbleibende Seite freiräumen muß, benötigt keinen Antrieb, sondern kann ausschließlich durch den Kontakt mit der Tabakpflanze in reibungsmindernde Rotation versetzt werden und wird zur Verminderung von Pflanzenschäden bevorzugt ebenfalls federnd gelagert.

Der Antrieb für die Abtrenneinrichtung und/oder das mit Abstreiffingern versehene Rad kann wegabhängig erfolgen, etwa durch ein Laufrad mit Bodenkontakt. Dabei läuft das mit Abstreiffingern versehene Rad bevorzugt etwa 30 bis 60 % schneller als es der Geschwindigkeit über Grund entspricht. Die genaue Übersetzung eines hierfür vorgesehenen Getriebes hängt unter anderem von der Anwinkelung des mit Abstreiffingern versehenen Rades ab. Am Rad selbst kann eine flexible Welle vorgesehen sein, um einen Antrieb trotz federnder Lagerung zu ermöglichen. Durch die höhere Geschwindigkeit wird der Tabakstock an die Vorernteeinrichtung herangezogen, was verhindert, daß der Tabakstock bei ungünstiger Ausrichtung der Abstreiffinger seitlich weggedrückt wird. Aufgrund der federnden Radlagerung kann dies nicht zu Tabakstock-Beschädigungen führen.

Auf beiden Seiten sind Führung, Abtrennvorrichtung und Vorerntevorrichtung bevorzugt an einem gemeinsamen Rahmen befestigt. Die Rahmen können mittels Federkraft gegeneinander vorgespannt sein, um die Klemmwirkung zu erhöhen und sind bevorzugt so aufgehängt, daß sie quer zur Fahrtrichtung pendeln, und zwar mit einem vorzugsweise noch begrenzbaren Pendelhub von bis 15cm in beide Richtungen. Die so erlaubte Pendelbewegung ermöglicht bei Durchfahrt durch ein Feld eine Einstellung des Ernteaggregates auf die nie exakt in Reihe stehenden, sondern stets leicht gegeneinander versetzten Pflanzen. Die Höhe der Rahmenaufhängung über Grund ist bevorzugt einstellbar, so daß für unterschiedliche Erntestufen, also bei der Ernte von Tabakblättern aus unterschiedlichen Höhen lediglich eine einzige Verstellung des vorgenommen werden muß. Der Rahmen wird bevorzugt durch das Feld gezogen.

Zudem können die Rahmen bevorzugt angelenkt werden, um sich, etwa bei Hin- und Rückfahrt durch eine Acker der windbedingten Neigung einer Tabakpflanzenreihe oder einer Geländeneigung quer zur Fahrtrichtung anzupassen.

Besonders bevorzugt werden die abgeernteten Tabakblätter zwischen Doppelbändern beidseits der Fahrtrichtung nach oben gefördert und dort gesammelt. Derartige Blattfördersysteme sind per se bekannt und haben sich im Feldeinsatz bei der Beschikkung aus manueller Ernte über Jahre hinweg bewährt. Die Tabakerntemaschine der vorliegenden Erfindung ist vorteilhafterweise so ausgelegt, daß dieses bewährte System mit der neuen Tabakerntemaschine einsetzbar ist, wobei zugleich Modifikationen am bekannten Blattfördersystem möglich bleiben, die seine Anwendbarkeit weiter verbessern.

Ein Herunterfallen abgeernteter Tabakblätter auf den Acker kann bei Einsatz solcher Blattfördersysteme zumindest im wesentlichen verhindert werden, wenn die nach unten abtrennenden Drehzylinder der Abtrenneinrichtung an ihrem unteren Ende einen Bürstenkranz aufweisen, dessen Borsten gegen einen Einzug der Hochfördereinrichtung für abgetrennte Blätter drehen. Die Doppelbänder sind bevorzugt so breit ausgelegt, daß sie auch die durch die Vortrenneinrichtung abgeernteten Tabakblätter einziehen.

Wenn die Hochförderungeinrichtung oberhalb der Pflanzenspitzen seitlich ausstellbar ist, ist bei Höhenverstellung des Rahmens eine zumindest weitgehend unveränderte Förderausgabeposition gewährleistet, auch wenn wie bevorzugt die Eingangsseite der Hochförderungeinrichtung zusammen mit dem Rahmen mitbewegt wird, um eine konstant gute Einspeisung in allen Erntestufen zu erlauben.

Wenn Blätter einer Erntestufe oder Tabaksorte geerntet werden, die sich einzeln nur schlecht einziehen lassen, kann eintrittsseitig eine blattbündelnde Schleuse vorgesehen werden. Dazu kann ein Sacktuch verwendet werden, das mit seinem durch eingenähte kurze Metallschienenstücke beschwerten unteren Saum das auf dem unter die Abstreifvorrichtung beginnende Förderband berührt. Das Sacktuch bildet so eine Stauklappe. Dieser Saum kann von einer hinreichend großen Blattmenge angehoben werden oder die Blätter werden von einem an der rotierenden Abstreifvorrichtung befestigten Wischarm unter der Stauklappe durchgeschoben.

Eintrittsseitig können der Hochfördereinrichtung vertikal stehende Walzen zugeordnet sein, die mit den recht langen Tabakblättern schon vor deren Entfernung vom Tabakstock Kontakt haben und sich derart drehen, daß die Tabakblätter nach Abtrennen in einer gewünschten Ausrichtung zwischen die hochfördernden Doppelbänder gelangen. Sofern die korrekte Ausrichtung der Blätter bis zur nachfolgenden Verarbeitung erhalten bleibt, wird das Einnähen, d.h. das Auffädeln der Blätter für die Trocknung, spürbar erleichtert. Dazu könnten die Blätter auf einer oben auf der Erntemaschine vorgesehene Arbeitsbühne sofort eingenäht werden.

Eine bevorzugte Variante sieht vor, daß an der Fördereinrichtung austrittsseitig eine vorzugsweise reibungsgesteuerte Blattbremse, etwa in Form eines schwergängigen Schaufelrades vorgesehen ist, um die geernteten Tabakblätter paketweise in einen Auffangbehälter zu entladen. Die Entladung in den Auffangbehälter erfolgt bevorzugt aus nur geringer Fallhöhe, wie 30 bis 35 cm, um die Kleinbündelung zu bewahren. Die konstante Ausgabehöhe kann erhalten werden, indem über einem Rahmen ein Sacktuch gleitend gespannt werden, das unter dem Gewicht des einfallenden Tabaks allmählich nach unten gezogen wird oder, bevorzugt, in Abhängigkeit von der Drehung des schwergängigen Schaufelrades von einer Rolle abgewickelt wird. Die später in das Tuch fallenden Tabakpakete treffen so auf den bereits im Tuch befindliche Tabakpakete auf. Die Kleinbündel können bei der Verarbeitung im Schuppen leicht einer Einnähvorrichtung zugeführt und entbündelt werden, indem der Sack am Einnähmaschineneintritt wieder aufgerollt wird .

Auf diese Weise wird ein vollautomatischer Tabakernter realisiert, der einnähgerecht erntet.

Es wird explizit darauf hingewiesen, daß zwar vorliegend die Fördereinrichtung sowie die Sammelvorrichtung mit Bündelung nur im Zusammenhang mit der Tabakerntemaschine beschrieben und beansprucht werden, aber diese Einheiten ohne weiteres auch für andere Tabakerntemaschinen vorteilhaft einsetzbar sind und für sich als schutzwürdige Neuerungen betrachtet werden. Die Einreichung speziell darauf gerichteter Anmeldungen unter Bezugnahme auf die vorliegende Anmeldung bleibt daher vorbehalten.

Wenn an einer Tabakpflanze bei einem ersten Durchgang der Erntemaschine über das Feld nicht alle reifen Blätter entfernt werden können, weil ein zu großer Höhenbereich erntereif ist, kann ohne weiteres zunächst in einem ersten Durchgang ein erster Teilbereich des Erntehöhenbereiches abgeernet werden und nachfolgend in einem weiteren Durchgang die Blätter aus dem verbleibenden Teilbereich entfernt werden. Wahlweise können auch etwa die Drehzylinder der Abtrennvorrichtung unterschiedlich lang gewählt werden.

Die Erfindung wird im folgenden nur beispielsweise anhand der Zeichnung beschrieben. In dieser zeigt:
- Fig. 1: eine perspektivische Skizze einer erfindungsgemäßen Tabakerntemaschine
- Fig.2: eine Ansicht einer Seite der Tabakerntemaschine von hinten mit zugeordneter Blatthochförder- und Aufnahmeeinheit
- Fig. 3: eine Draufsicht auf die Tabakerntemaschine einseitig mit zugeordneter Blatthochfördereinheit
- Fig. 4a: eine Detailansicht einer Vorrichtung zum Abtrennen erntereifer Tabakblätter von zwischen den Führungen befindlichen Tabakstöcken.
- Fig. 4b: eine Draufsicht auf die Antriebskettenführung der Abtrennvorrichtung

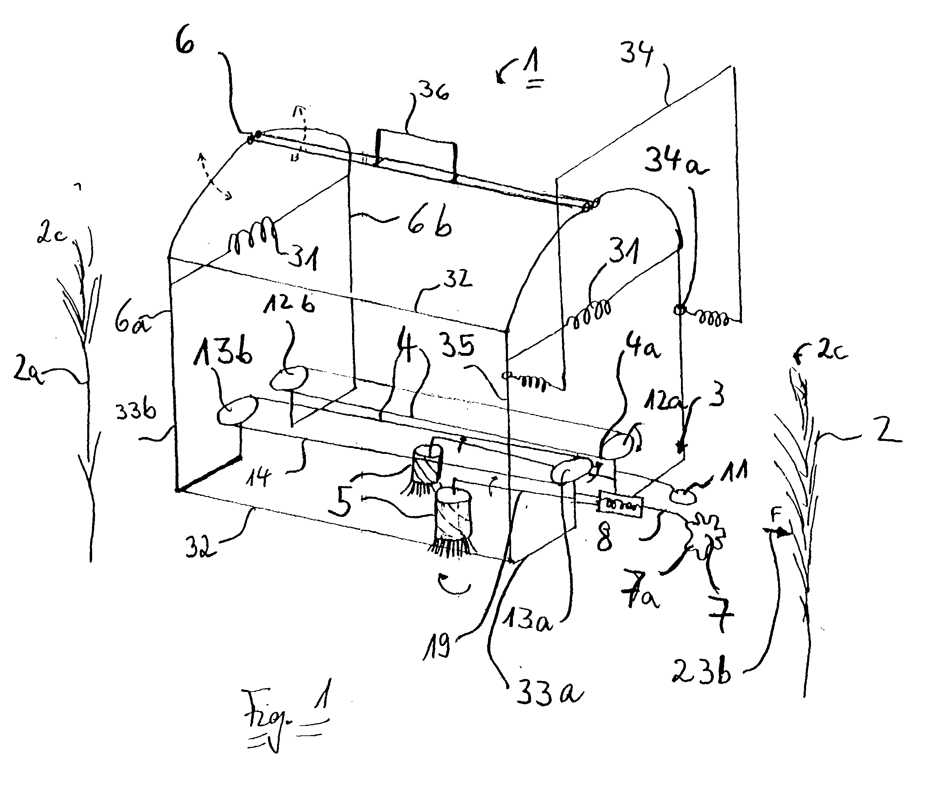

Nach Figur 1 umfaßt eine allgemein mit 1 bezeichnete Tabakerntemaschine 1 zur selektiven Ernte von Blätter 2 in einem vorgegebenem Höhenbereich an einem Tabakstock 2a eine Vorerntevorrichtung 3, Führungen 4 zum Klemmen des Tabakstockes nach erfolgter Vorernte und eine Abtrennvorrichtung 5 zum Abtrennen erntereifer Tabakblätter, die gemeinsam an einem Rahmen 6 vorgesehen sind.

Die Vorerntevorrichtung 3 wird auf einer ersten Seite der Tabakerntemaschine 1, vorliegend in Fahrtrichtung rechts, durch ein nach vorne vorstehendes Rad 7 realisiert, das mit fünf bis zwölf sternförmig abgespreizten Fingern 7b versehen ist, die eine Länge von z.B. 5 cm besitzen.

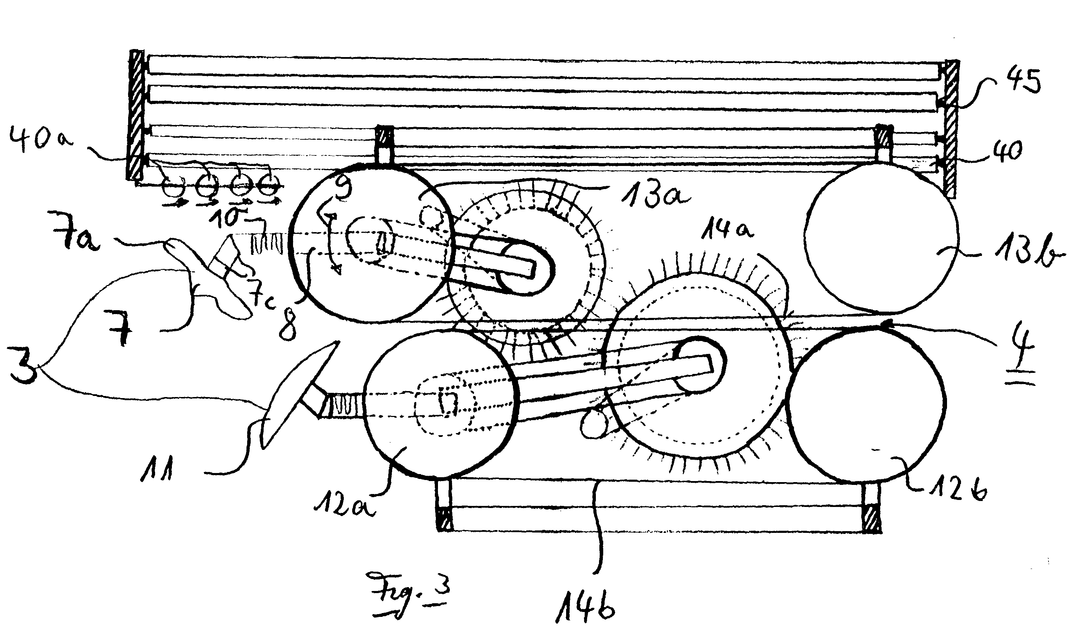

Das Rad 7 ist über ein Rohr oder eine Stange 8 zur Fahrtrichtung quer schwenkbar am Rahmen 6 angelenkt, wie durch Pfeil 9 (Fig. 3) angedeutet, wobei seine Ruhelage mittig vor dem Eintritt 4a in Führung 4 liegt. Der Schwenkbereich ist durch Anschläge begrenzt. Die Stange 8 ist derart gestaltet, daß das Rad 7 mit einem Winkel 7c von 45 Grad gegen die Fahrtrichtung angestellt und seine Achse mit einem Winkel von 25 Grad zum Boden geneigt ist, wie bei 7c in Fig. 3 angedeutet. Die Winkel zwischen Rad und Rahmen sind vorzugsweise um wenigstens 5 Grad veränderbar einstellbar. Zwischen Rahmen 6 und Rad 7 ist im Rohrverlauf eine Federeinheit 10 vorgesehen, die eine Vor- und Zurückbewegung des Rades 7 in bzw. gegen die Fahrtrichtung erlaubt. Das Rad ist mit einem wegabhängigen Antrieb über ein Getriebe verbunden (nicht gezeigt), das eine Übersetzung zwischen z.B. 1,2 und 1,6 vorsieht, wobei die Verbindung zum Antrieb vorteilhaft über eine biegsame Welle hergestellt ist , so daß sich das Rad 7 ungehindert verschwenken und verschieben kann. Das Rad 7 kann aus Sicherheitsgründen partiell mit einer Abdeckung versehen sein.

Ein zweites Rad 11 ist auf der gegenüberliegenden Seite der Tabakerntemaschine als weiterer Teil der Vorerntevorrichtung vorgesehen. Das Rad 11 ist gleichfalls schwenkbar und vor- und zurückbeweglich am Rahmen befestigt, besitzt aber weder sternförmig abgespreizte Finger noch einen Antrieb und steht weniger weit in Fahrtrichtung vor als das gegenüberliegende Rad 7, vgl. Fig.3.

Die Führungen 4 zur Führung der Tabakstöcke durch die Erntemaschine umfassen beidseits der Fahrtrichtung je ein beabstandetes Umlenkrollenpaar 12 und 13, zwischen denen je wenigstens ein elastischer Keilriemen 14 horizontal und parallel zur Fahrtrichtung verläuft.

Nach Fig. 3 ist die vordere erste Umlenkrolle 13a auf der einen Seite gegen die vordere Umlenkrolle 12a auf der anderen Seite in Fahrtrichtung versetzt. Die dem Vorernterad 7 mit Abstreiffingern 7a zugeordnete Umlenkrolle 13a liegt in Fahrtrichtung vor der gegenüberliegende Umlenkrolle 12a.

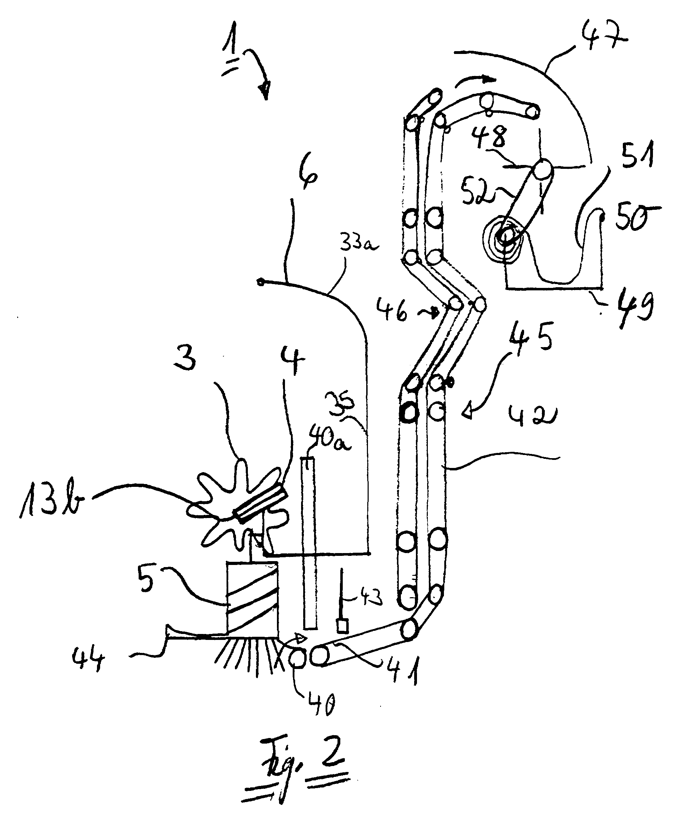

Während die Umlenkrollen 12, 13 allgemein horizontal liegen, kann ihre Achse auch geneigt sein, wie bei Fig. 2 angedeutet. Die Neigung der Umlenkrollen ist dabei dem Winkel angepaßt, in dem die Blätter 2 einer gegebenen Tabaksorte zum Tabakstock stehen. Der Abstand der Umlenkrollen 13a und 13b sowie 12a und 12b ist nur so groß, daß sich bei gegebenem Tabakpflanzenabstand auf einem Feld nie mehr als zwei Tabakstöcke in der Führung befinden.

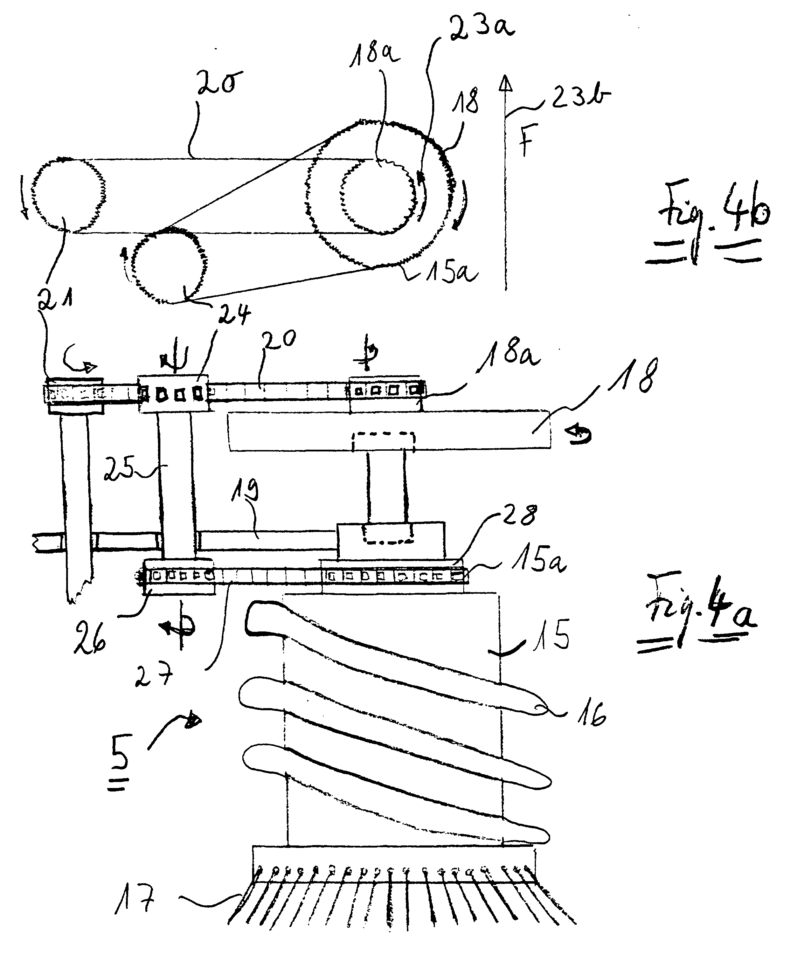

Nach Fig.4 umfaßt die Abtrennvorrichtung 5 zum Abtrennen erntereifer Tabakblätter auf beiden Seiten je einen Rotiertrenner mit einem Drehzylinder 15, auf dessen Mantelfläche ein stumpfer Abstreifsteg 16 aus flexiblem, elastischen Material wie Keilriemen oder dergl. wendelförmig angeordnet ist. Unterhalb des Drehzylinders 15 ist ein Borstenkranz 17 angeordnet. Oberhalb des Drehzylinders und koaxial dazu ist ein Abrollrad 18 vorgesehen, das einen größeren Durchmesser hat als der Drehzylinder 15 und dessen aufgesetzter Abstreifsteg 16. Das Abrollrad 18 und der Drehzylinder 15 sind gegeneinander frei drehbar und gemeinsam über eine Strebe 19 quer zur Fahrtrichtung schwenkbar am Rahmen angelenkt, vgl. Fig.1. Der Schwenkbereich ist durch Anschläge begrenzt.

Die Streben 19 beidseits der Fahrtrichtung sind so dimensioniert, daß sich die beiden Drehtrenner nicht berühren können.

Nach Fig. 4b wird der Abtrennvorrichtung 5 Antriebsenergie über eine Antriebskette 20 von einem wegabhängig am Rahmen 6 rotierenden Zahnrad 21 zugeführt. Die Drehrichtung wird so gewählt, daß das Abrollrad 18 sich an der Führungsinnenseite in Fahrtrichtung dreht, wie durch die Pfeile 23a (Rotationsrichtung) und 23b (Fahrtrichtung F) angedeutet. Von außen greift an die Antriebskette 20 ein Zahnrad 24 an, das über Welle 25, Zahnrad 26, Kette 27 und ein drehfest mit dem Drehzylinder 15 verbundenes Zahnrad 29 dem Drehzylinder 15 Antriebsenergie für eine zur Rotation des Abrollrades 18 gegenläufige Drehung zuführt.

Der Rahmen 6 besteht aus zwei beidseits der Fahrtrichtung pendelnd oberhalb der maximalen Pflanzenhöhe 2c aufgehängten Rahmenhälften 6a, 6b, die gegeneinander durch Federn 31 vorgespannt sind. Jede Rahmenhälfte besteht aus einer vorderen und einer hinteren Schwinge 33a, 33b, die über parallel zur Fahrtrichtung verlaufende Verbindungsstreben 32 miteinander verbunden sind. Zur Einstellung der Spannung von Keilriemen 14 sind die Längen der Verbindungsstreben 32 einstellbar, so daß diese einen Spannrahmen bilden. An der Aufhängung ist an jedem Schwingenpaar zwischen den Schwingen 33a, 33b ein Distanzstück vorgesehen. Die Schwingen 33a, 33b sind mit dem Distanzstück zusammen nach vor- und zurückbeweglich aufgehängt.

Wie aus Fig. 2 ersichtlich, kann der Aufhängepunkt so gewählt werden, daß die Führung 4 auf die Mitte hin zupendelt. Am Rahmen 6 ist vorne eine Zugvorrichtung 34 vorzugsweise federnd angebracht, mit welcher dem Rahmen zugleich eine Neigung quer zur Fahrtrichtung verliehen werden kann. Ringösen 34a der Zugvorrichtung 34 gleiten um die Vertikalstrebe 35 der zugeordneten Schwinge 33.

Der Rahmen 6 ist oberhalb der Pflanzenspitzen in einer verstellbaren Höhe über Grund an einem quer zur Fahrtrichtung verlaufenden Ausleger einer Zugmaschine oder dergl. aufgehängt, allgemein angedeutet durch Bezugszahl 36. (nicht dargestellt). Dieser Ausleger kann für die Befestigung mehrerer Rahmen nebeneinander ausgebildet sein, um mehrere Pflanzenreihen gleichzeitig zu ernten. Es wird einzuschätzen sein, daß in einem solchen Fall keine unmittelbar benachbarten Reihen abgeerntet werden. Die Zugmaschine kann auf einem Fahrweg neben den Pflanzenreihen fahren.

Vorteilhafterweise ist der Erntemaschine eine Blattaufnahme zugeordnet, die die abgetrennten Blätter insbesondere für ein späteres Einnähen vorbereitet sammelt.

Die einnähgerechte Blattaufnahme und -sammlung kann wie mit Bezug auf Fig. 2 und 3 beschrieben aufgebaut sein.

Nach Figur 2 erstreckt sich eine angetriebene Walze 40 über die ganze Breite des Rahmens seitlich außen unterhalb des Drehzylinders 5 und in Kontakt mit den darüber streifenden Borsten des Bürstenkranzes 17. Die Walze rotiert derart, daß auf ihr aufliegende, geerntete Blätter in Richtung auf den Einführbereich 41 eines Bandfördersystems 42 bewegt werden. Im Bereich der Vorerntevorrichtung 5 ist eine Mehrzahl stehender Walzen 40a vorgesehen, die sich auf ihrer Rad 7 zugewandten Seite zum Rahmen 6 hin drehen.

Im Blattweg auf dem Bandfördersystems 42 ist quer über die Bandbreite ein dicht an das Band heranreichendes Tuch 43 mit durch eine Anzahl von Einlegeschienenstücken beschwertem Saum vorgesehen. Ein am Borstenkranz 17 vorgesehener Wischer 44 reicht bei entsprechender Drehstellung des Drehzylinders 5 bis zum Tuch 43 und hebt dieses an.

Das Bandfördersystem 42 nimmt hinter dem Tuch 43 einen vertikal ansteigenden Verlauf, wobei ihm ein dicht gegenüberliegendes Band 44 zugeordnet ist, um ein Doppelfördersystem zu bilden, zwischen dessen Spalt durch Wischer 4 und Tuch 43 gebündelte Blattpakete in eine Höhe oberhalb der Blattspitzen gefördert werden.

Das Doppelfördersystem weist in seinem Vertikalverlauf ein Gelenk 46 auf, über welches es seitlich ausstellbar ist, um eine konstante Ausgabehöhe zu gewährleisten, wenn die Höhe des Bandeintritts verändert wird. Die Höhe des Bandeintritts Doppelfördersystems kann für die Ernte unterschiedlicher Tabaksorten und/oder unterschiedlicher Erntestufen relativ zum Rahmen sowie auch gemeinsam mit diesem verändert werden (nicht gezeigt).

Ausgangsseitig fallen die Blätter unter einem Wetterschutz 47 auf ein Schaufelrad 48, das mit so hoher Reibung gelagert ist, daß erst eine Ansammlung Blätter zwischen Wetterschutz 47 und Schaufelrad 48 zur Überwindung der Reibung ausreicht. Unterhalb des Schaufelrades 48 ist ein Vorratsbehälter-Rahmen 49 vorgesehen, auf dessen einer Seite 50 ein Sacktuch 51 ist auf eine Spule aufgewickelt, die gegenüberliegend am Vorratsbehälter-Rahmen 49 drehbar gelagert ist und über einen Kettenantrieb 52 synchron zur Drehung des Schaufelrades, aber mit großer, etwa durch ein Schneckengetriebe zu realisierender Untersetzung, allmählich abgerollt wird. Die Fallhöhe für die Blätdarin befindlichen Blätter beträgt nicht mehr als 35 cm.

Das Sacktuch kann nach Befüllen mit dem Rahmen entnommen werden.

Die Erntemaschine der vorliegenden Erfindung wird wie folgt betrieben.

Zunächst wird die Höhe des Rahmens 6 und der Hochfördereinrichtung 45 der Erntestufe und der abzuerntenden Tabaksorte angepaßt. Gegebenenfalls wird die horizontale Kippung der Umlenkrollen 12, 13 entsprechend dem Blattwachstum eingestellt.

Dann wird unmittelbar vor Durchfahrt durch die Pflanzenreihe am Lenker 34 die Neigung des Rahmens an die allgemeine Ausrichtung der Tabakstöcke und/oder die Geländeneigung angepaßt.

Die Tabakerntevorrichtung der vorliegenden Erfindung wird dann durch das Tabakfeld gezogen. Bei Annäherung an einen Tabakstock gelangen zunächst seine Blätter an die vertikalen Walzen 40a. Unmittelbar darauf oder gleichzeitig gelangen die sternförmig abstehenden Finger des Rades 7 in Kontakt mit dem Tabakstock. Da sie schneller laufen, als es der Bewegung des Rahmens entspricht, werden sie unter partiellem, halbmondförmigem Umlaufen des Tabakstockes nach vorne gezogen. Aufgrund der federnden Lagerung des Rades 7 an Federung 10 wird das Rad 7 etwas nach vorne gezogen. Sofern ein Tabakstock frontal von einem Abstreiffinger berührt wird, wird Rad 7 sich durch Federung 10 etwas zurückbewegen und der Tabakstock gelangt auch dann zwischen zwei Abstreiffinger.

Während des partiellem Umlaufens werden die Blätter am Tabakstock nach unten weggebrochen und werden aufgrund ihres vorherigen Kontaktes mit der vertikal stehenden Walze in gewünschter Ausrichtung auf die Hochfördereinrichtung, wo sie sich zunächst am Sacktuch 43 stauen.

Die nicht abgeerntete Seite des Tabakstockes wird dann vom genüberliegenden Rad abgeerntet. Obwohl aus Gründen der Übersichtlichkeit nicht dargestellt, ist einsichtig, daß auch dort Stehwalzen und eine Hochfördereinrichtung vorgesehen sind und die Blätter gesammelt werden.

Dann gelangt durch das Weiterziehen des Rahmens der Tabakstock zwischen die die Führung 4 definierenden Keilriemen 14. Aufgrund des Versatzes der Umlenkrollen 12 und 13 geschieht dies auch bei hohem Gewicht des Rahmens ohne Quetschen des Tabakstockes, also auf schonende Weise. Da die von der Führung 4 sowie dem Antrieb der Abtrennvorrichtung 5 eingenommene Höhe vom Rad 7 freigeräumt ist, treten dabei keine Beschädigungen an der Pflanze auf, etwa durch abgeknickte Blätter.

Während der Rahmen 6 über den Tabakstock bewegt wird, wird der Tabakstock elastisch zwischen den Keilriemen geklemmt, d.h. geführt und gehalten. Aufgrund der Lagerung der Keilriemen auf Umlenkrollen befindet sich der Keilriemen zum Tabakstock in Ruhe, reibt also nicht an dessen Oberfläche.

Dann gelangt erste Abrollrad 18 an den Tabakstock. Aufgrund seines Antriebes läuft es um den Tabakstock partiell um; da der Antrieb wegabhängig ist, tritt kein oder allenfalls wenig mit Reibung zwischen Abrollrad und Tabakstock verbundener Schlupf auf.

Während das Abrollrad den Tabakstock partiell umläuft, streift der sich mit Drehzylinder 15 in Gegenrichtung zum Abrollrad drehende Abstreifsteg 16 über die Tabakblätter und bricht diese schonend nach unten weg. Die durch das nur partielle Umlaufen der Tabakpflanze nicht abgeernteten Blätter auf der gegenüberliegenden Seiten werden mit dem nachfolgenden gegenüberliegenden Rotiertrenner von der anderen Seite her entfernt.

Die Blätter fallen auf die auf der Walze 40 aufliegenden Borsten des Borstenkranzes 17 und werden von dieser auf den Einführbereich 41 eines Bandfördersystems 42 bewegt.

Diese Einspeisung in das Hochfördersystem ist dafür ausgebildet, daß die geernteten Blätter nicht mit den Spitzen nach oben oder unten zwischen das Doppelförderband gelangen, sondern in allgemein horizontaler Ausrichtung der zwischen Blattstengel und -spitze verlaufenden Rippen. Beim überwiegenden Teil der Blätter weisen die Spitzen gegen die Fahrtrichtung, lediglich ein Anteil von 10 bis 30 % hat dagegen allgemein nach vorne weisende Spitzen. Zur Ausrichtung trägt auch der durch Walzen 40a am Vorräumrad 7 realisierte Einzug bei. Die weitgehend gleiche Ausrichtung erleichtert das nachfolgende Einnähen, für das weder der geringe Teil der mit den Spitzen in die falsche Richtung eingezogener Blätter noch eine leichte Schräglage der Blattrippen hinderlich ist.

Die geernteten Blätter stauen sich zunächst am Tuch 43 und bündeln so zu kleinen Paketen . Wenn der Wischer 44 die Blätter unter dem als Stauklappe dienenden Tuch durchschiebt oder -drückt, können die Blattpakete nach oben weg transportiert werden, wo sie aus geringer Höhe auf das Schaufelrad 47 fallen. Wenn dort eine hinreichend große Blattmenge aufgestaut ist, dreht sich das Schaufelrad 47 weiter und die durch den Staudruck gebündelten Blätter fallen in das sich allmählich nach unten abrollende Sacktuch. Aufgrund der geringen Fallhöhe in das Sacktuch tritt keine über die Bündelung hinausgehende Verdichtung auf.

Wenn das Sacktuch vollständig abgerollt ist, wird ein neuer Vorratsbehälter-Rahmen 49 unter das Schaufelrad bewegt.

Der abgeerntete Tabakstock verläßt dann die Führung und der Rahmen bewegt sich auf den nächsten Tabakstock der Reihe zu. Am Ende der Pflanzenreihe wird die Erntemaschine gewendet und gegebenenfalls die Neigung des Rahmens für die Rückfahrt angepaßt. Wenn ein zu großer Höhenbereich abgeerntet werden muß, kann das Feld mit zwei Durchgängen abgeerntet werden.

In der Scheune werden die vor den Eingang der Einnähmaschine gebrachten, gefüllten Sacktücke wieder aufgespult, wobei sich die einnähfertig ausgerichteten Blätter in leicht verarbeitbaren Bündeln entleeren.

Damit ist mit der vorliegenden Erfindung eine pflanzenschonende, einnähgerechte Ernte erzielt.

Anders als vorstehend beschrieben, kann die Tabakerntemaschine auch mehrere Keilriemen auf beiden Seiten zur verbesserten Führung besitzen. Dazu können breitere Umlenkrollen verwendet werden.

Anders als in der vorstehenden Beschreibung, wonach das zweite Rad 11 einen vereinfachten Aufbau besitzt, können auf beiden Seiten Sternräder verwendet werden und/oder beidseits Antriebe vorgesehen sein.

Anders als in Fig. 4a dargestellt, muß der Borstenkranz 17 nicht als separates Bauteil am Drehzylinder 15 vorgesehen werden, sondern kann in diesen integriert werden.

Anders als in Fig. 4a gezeichnet, kann auf dem Abrollrad ebenfalls ein nachgiebiges elastisches Material vorgesehen sein, um den Tabakstengel bei der Abrollbewegung zu schonen.

Die vertikal stehenden Walzen 40 a können sich weiter nach hinten, z.B. bis zum Rotiertrenner erstrecken und/oder ein als mit einem darüberlaufenden Ausrichtförderband versehen sein.

Es sei darauf hingewiesen, daß das Hochförderband mit einer Struktur, etwa horizontal verlaufenden Stegen versehen sein kann, um die Blatteinführung bzw. den -transport zu erleichtern.

Weiter kann anstelle einer Hochförderung das geerntete Blattgut auch in Sackrinnen neben und unter dem Rahmen wie per se bekannt gesammelt werden. Dies ist für nicht eingenähte Tabaksorten wie Virgin möglich.

Obwohl nicht gezeichnet, ist einsichtig, daß die Antriebsenergie für die Vor-Erntevorrichtung 3, die Haupterntevorrichtung 5, sowie gegebenenfalls die Führung 4 und/oder die Hochfördereinrichtung und Blatteinzugsausrichtung über eine dicht am Rahmen 6 von oben herunter geführte Welle oder dergl., z.B. eine Kardanwelle oder einen Riemenantrieb zugeführt werden kann. Wahlweise sind insbesondere weg- und/oder lastabhängig gesteuerte Elektromotoren einsetzbar.

Die Vorernte ist im übrigen nicht zwingend so zu gestalten, daß dort nur ein geringer Bruchteil der in einem Durchgang abzuerntenden Blätter abgenommen wird. Vielmehr kann insbesondere bei luftzutrocknenden Tabaksorten und somit für einnähgerechtes Ernten der überwiegende Blattanteil bei der Vorernte vom Tabakstock entfernt werden, während mit dem dann folgenden Ernteschritt ein geringerer Blattanteil entfernt wird.

Zusammenfassend dienen in einer Tabakerntemaschine also horizontal und parallel zur Fahrtrichtung verlaufende, den Tabakstock beidseitig elastisch klemmende, zwischen Umlenkrollen gespannte Riemen, die relativ zum Tabakstock nahezu ruhen, als sich in Fahrtrichtung nach vorne öffnenden Führung für den Tabakstock. Eine Vorrichtung zum Abtrennen erntereifer Tabakblätter umfaßt beidseits einen vorne an einem quer zur Fahrtrichtung pendelnden, höhenverstellbaren Rahmen angelenkten und gegen den Tabakstock vorgespannten Drehzylinder, der einen Antrieb und auf seiner Mantelfläche eine schräg verlaufende Abstreifkante besitzt, um am Tabakstock in Fahrtrichtung drehend partiell um den Tabakstock umzulaufen. Erfindungsgemäß ist eine Vorerntevorrichtung vorgesehen, um im Höhenbereich der Führung vorhandene Tabakblätter vor Eintritt des Tabakstockes zwischen die Führung zu entfernen. Die Vorerntevorrichtung kann auf einer Seite ein wegabhängig rotierendes, mit sternförmig abstehenden Abstreiffingern versehenes Rad umfassen, das axial vor- und zurückfedernd aufgehängt und insbesondere in einem Winkel von 30° bis 45° gegen die Fahrtrichtung und mit 20° bis 35° gegen den Boden geneigt ist.

## Patentansprüche

1. Tabakerntemaschine (1) mit einer sich in Fahrtrichtung nach vorne in eine Eintrittsmündung öffnenden Führung (4) für Tabakstöcke (2a) mit abzuerntenden Tabakblättern (2c) und einer Vorrichtung (5) zum Abtrennen erntereifer Tabakblätter von zwischen der Führung befindlichen Tabakstöcken sowie einer Räumeinrichtung (42) zur Entfernung von im Höhenbereich der Führung vorhandenen Tabakblättern,
**dadurch gekennzeichnet, daß**
die Räumeinrichtung als Vorerntevorrichtung (3) ausgebildet ist, welche vor der Eintrittsmündung angebracht ist, und welche so ausgebildet ist, dass die im Höhenbereich der Führung vorhandenen Tabakblätter noch vor Eintritt des Tabakstockes zwischen die Führung aberntbar sind.

2. Tabakerntemaschine nach dem vorhergehenden Anspruch, worin die Führung dazu ausgebildet ist, elastisch an dem oder jedem geführten Tabakstock vorzugsweise klemmend anzuliegen und/oder für eine Bewegung ausgelegt ist, die an den Führungsstellen relativ zum Tabakstock langsamer ist als die Bewegung von Tabakstock zur Erntemaschine, wobei die Führung insbesondere in Fahrtrichtung links und rechts des Tabakstockes jeweils mindestens einen horizontal verlaufenden Riemen umfaßt, der allgemein parallel zur Fahrtrichtung zwischen wenigstens zwei Umlenkrollen mit allgemein vertikaler und/oder entsprechend einer der Blattneigung angestellter Achse gespannt ist, wobei die vorderen Umlenkrollen für eine gegenläufige Drehung auf den beiden Seiten des Tabakstockes ausgebildet sind und bevorzugt in Fahrtrichtung um 1/3 bis 1/4 eines Pflanzenabstandes gegeneinander versetzt sind.

3. Tabakerntemaschine, worin die Führung zur gleichzeitigen Aufnahme von maximal zwei Tabakstöcken in Reihe hintereinander bemaßt ist.

4. Tabakerntemaschine nach einem der vorhergehenden Ansprüche worin auf jeder Seite die Führung die Abtrennvorrichtung und die Vorerntevorrichtung an einem gemeinsamen Rahmen befestigt sind und bevorzugt die Abtrennvorrichtung wenigstens einen, vorzugsweise in Fahrtrichtung vorne am Rahmen angelenkten und gegen den Tabakstock vorgespannten Drehzylinder auf jeder Führungsseite umfaßt, der insbesondere auf seiner Mantelfläche einen schräg verlaufenden, vorzugsweise breiten Abstreifsteg und einen Antrieb besitzt, um am Tabakstock in Fahrtrichtung drehend partiell um den Tabakstock umzulaufen, wobei vorzugsweise ein am Tabakstock aufliegendes Abrollrad koaxial zum Drehzylinder vorgesehen ist.

5. Tabakerntemaschine nach einem der vorhergehenden Ansprüche, worin die Vorerntevorrichtung ein rotierendes, mit sternförmig abstehenden Abstreiffingern versehenes Rad umfaßt, das auf einer ersten Seite axial verschiebbar, insbesondere vor- und zurückfedernd und/oder quer zur Fahrtrichtung schwenkbar und in Ruhe insbesondere mittig vor dem Führungseintritt aufgehängt ist und/oder insbesondere in einem Winkel von 20° bis 35° gegen die Fahrtrichtung und in einem Winkel von 40° bis 50° gegen den Boden geneigt ist.

6. Tabakerntemaschine nach dem vorhergehenden Anspruch, worin die Vorerntevorrichtung auf der anderen Seite ein weiteres drehbares Rad umfaßt, das vorzugsweise ebenfalls in einem Winkel von 30° bis 45° gegen die Fahrtrichtung und in einem Winkel von 20° bis 35° gegen den Boden geneigt ist.

7. Tabakerntemaschine nach einem der vorhergehenden Ansprüche, mit einem insbesondere wegabhängigen Antrieb zumindest für das mit Abstreiffingern versehene Rad und vorzugsweise wenigstens auch für die Abtrenneinrichtung, insbesondere mit einem Übersetzungsgetriebe, durch welches das mit Abstreiffingern versehene Rad um einem Faktor von etwa 1,2 bis 1,6 vorzugsweise etwa 1,4 schneller läuft als es der Bewegung über Grund entspricht.

8. Tabakerntemaschine nach einem vorhergehenden Anspruch, worin die beiden Rahmen insbesondere gegeneinander vorgespannt pendelnd und/oder höhenverstellbar aufgehängt sind und bevorzugt gemeinsam zur Anpassung an eine Bodenneigung und/oder einer allgemeinen Neigung einer Tabakstockreihe im Winkel quer zur Fahrtrichtung angestellt werden können.

9. Tabakerntemaschine nach einem der vorhergehenden Ansprüche mit nach oben laufenden Doppelbändern zur Hochförderung abgetrennter Tabakblätter beidseits der Fahrtrichtung, wobei bevorzugt die Tabakblätter nach unten abtrennenden Drehzylinder der Abtrenneinrichtung an ihrem unteren Ende einen Bürstenkranz aufweisen, dessen Borsten gegen einen Einzug der Hochförderungseinrichtung für abgetrennte Blätter drehen und weiter bevorzugt die Hochförderungeinrichtungen oberhalb der Pflanzenspitzen seitlich ausstellbar sind, um bei Höhenverstellung des Rahmens eine zumindest weitgehend unveränderte Förderausgabe zu gewährleisten und/oder der Hochfördereinrichtung eintrittsseitig vertikal stehende Ausrichtwalzen zugeordnet sind, um den Tabakblätter während des Vorerntens eine gewünschte Ausrichtung zu erteilen, und/oder der Hochfördereinrichtung eintrittsseitig eine vorbündelnde Eintrittsschleuse zugeordnet ist und/oder austrittsseitig eine vorzugsweise reibungsgesteuerte Blattbremse vorgesehen ist, um die geernteten Tabakblätter paketweise in einen Auffangbehälter, insbesondere eine sich befüllungsabhängig von einer Rolle abspulendes Tuchbahn zu entladen.

10. Verfahren zur Ernte von Pflanzenblättern in einem vorgegebenen Erntehöhenbereich des Pflanzenstockes, **dadurch gekennzeichnet, daß** ein erster Teil des Erntehöhenbereiches vom freistehenden Pflanzenstock allseitig abgeerntet wird, der Pflanzenstock an diesem ersten Teil zwischen zwei sich relativ zum Pflanzenstock allenfalls langsam bewegende, längliche Führungen elastisch geklemmt wird, und im unterhalb der Führungen liegenden weiteren Erntehöhenbereich Pflanzenblätter allseitig mit einer den Pflanzenstock unter Drehung um die eigene, allgemein vertikale Achse umlaufenden Abtrennvorrichtung abgetrennt werden.

11. Verfahren zur Ernte von Pflanzenblättern nach dem vorhergehenden Anspruch, worin bei einem Durchgang der Erntemaschine die Blätter aus einem ersten Teilbereich des Erntehöhenbereiches entfernt werden und in einem oder mehreren weiteren Durchgängen die Blätter aus dem verbleibenden Teilbereich entfernt werden und/oder worin die Führungen und/oder die vertikalen Achsen der umlaufenden Abtrennvorrichtung entsprechend der allgemeinen Neigungsrichtungen einer Pflanzenreihe eingependelt werden, wobei jeweils insbesondere die Pflanzen Tabakpflanzen sind.

## Claims

1. Tobacco harvesting machine (1) having a guide means (4) opening towards the front into an inlet opening for tobacco stems (2a) with tobacco leaves (2c) to be harvested and a device (5) for severing ripe tobacco leaves from tobacco stems situated between the guide means, as well as a clearing device (42) for removing tobacco leaves located at the height of the guide means,
**characterised in that** the clearing device is constructed as preharvesting device (3) which is arranged in front of the inlet opening and which is so constructed that the tobacco leaves located at the height of the guide means can be harvested before the tobacco stems enter between the guide means.

2. Tobacco harvesting machine according to one of the preceding claims, wherein the guide means is constructed to elastically contact the or each guided tobacco stem preferably in a wedge-like manner and/or is designed for a movement which at the guiding points relative to the tobacco stem is slower than the movement of tobacco stem relative to the harvesting machine, wherein the guide means in particular in the direction of travel left and right of the tobacco stem in each case has at least one horizontally running belt which is stretched in general parallel to the direction of travel between at least two return rollers having generally a vertical axis and/or an axis which corresponds to the inclination of the leaf, wherein the front return rollers are constructed for counter revolution on the two sides of the tobacco stem and preferably displaced with respect to each other in the direction of travel by 1/3 to 1/4 of the distance between plants.

3. Tobacco harvesting machine wherein the guide means is dimensioned to simultaneously receive a maximum of two tobacco stems in a row one behind the other.

4. Tobacco harvesting machine according to one of the preceding claims, wherein on each side of the guide means the severing device and the preharvesting device are attached to a common frame and preferably the severing device comprises on each side of the guide means at least one rotary cylinder, preferably linked to the front of the frame in the direction of travel and pretensioned with respect to the tobacco seem, which in particular on its outer surface has a diagonally extending, preferably wide stripper edge and a drive in order to partly run around the tobacco stem whilst rotating in the direction of travel, wherein a roll-off wheel, preferably contacting the tobacco stem, is provided coaxially to the rotary cylinder.

5. Tobacco harvesting machine according to one of the preceding claims, wherein the preharvesting device comprises a rotating wheel, provided with stripper members projecting in star-shaped manner, which on a first side is axially suspended in particular to spring forward and back and/or transverse to the direction of travel and at rest suspended in particular centrally in front of the guide means inlet and/or in particular at an angle of 20° to 35° counter to the direction of travel and at an angle of 40° to 50° inclined towards the ground.

6. Tobacco harvesting machine according to one of the preceding claims, wherein the preharvesting device on the other side comprises an additional rotatable wheel which is inclined towards the ground preferably also at an angle of 30° to 45° counter to the direction of travel and at an angle of 20° to 35° inclined towards the ground.

7. Tobacco harvesting machine according to one of the preceding claims, having a drive which in particular is dependent on the path of travel at least for the wheel provided with the stripper members and preferably at least also for the severing device, in particular with a step-up gear, by which the wheel provided with the stripper members runs faster than the corresponding movement above ground by a factor of approximately 1,2 to 1,6, preferably approximately 1,4.

8. Tobacco harvesting machine according to one of the preceding claims, wherein the two frames are suspended in particular with respect to each other for pendulum motion and/or for height adjustment and preferably together for adapting to an inclination towards the ground and/or a general inclination of a row of tobacco stems can be arranged at an angle transverse to the direction of travel.

9. Tobacco harvesting machine according to one of the preceding claims, with upward running twin belts for transporting upwards severed tobacco leaves on both sides to the direction of travel, wherein the rotary cylinders of the severing device, which preferably sever the tobacco leaves downwards, at their bottom end have a circular brush whose bristles rotate against an intake of the upwards conveying device for severed leaves and furthermore preferred the upwards conveying devices can be laterally displaced above the plant tips in order during height adjustment of the frame to ensure an at least substantially unchanged conveyor output and/or vertically arranged alignment rollers are allocated to the upwards conveying device on the inlet side in order to provide the tobacco leaves with a desirable alignment during preharvesting, and/or the upwards conveying device on the inlet side is allocated a prebundling inlet gate and/or on the outlet side there is preferably provided a friction controlled leaf brake in order to unload by packets the harvested tobacco leaves into a collecting container, in particular into a length of cloth unwound from a roller in response to the fullness.

10. Method for harvesting plant leaves at a given harvesting height of the plant stem, **characterised in that** the freestanding plant stems are harvested on all sides in a first part of the harvesting height region, the plant stems in this first part are elastically wedged between two elongated guide means moving slowly relative to the plant stems, and in the further harvesting height region situated below the guide means plan leaves are severed on all sides by a severing device rotating about its own generally vertical axis.

11. Method for harvesting plant leaves according to the preceding claims, wherein during one pass of the harvesting machine, the leaves are removed from a first part region of the harvesting height region and during one or more further passes the leaves are removed from the remaining part region and/or wherein the guide means and/or the vertical axes of the rotating severing device are swung in to correspond with the general direction of inclination of a row of plants, the plants in each case being tobacco plants.

## Revendications

1. Machine à récolter le tabac (1) comportant un guide (4) pour les plants de tabac (2a) portant des feuilles de tabac (2c) à récolter, qui s'ouvre à l'avant par rapport au sens d'avancement en une ouverture d'entrée, et un dispositif (5) pour couper les feuilles de tabac arrivées à maturité des plants de tabac se trouvant dans le guide, ainsi qu'un dispositif (42) pour détacher des feuilles de tabac se trouvant à la hauteur du guide, **caractérisée en ce que** le dispositif de détachage est réalisé sous forme de dispositif de prérécolte (3) qui est fixé devant l'ouverture d'entrée et qui est conçu de telle manière que les feuilles de tabac situées à la hauteur du guide peuvent encore être récoltées avant que le plant de tabac ne pénètre dans le guide.

2. Machine à récolter le tabac selon la revendication précédente, dont le guide est conçu pour s'appliquer de manière élastique contre le plant ou chaque plant de tabac guidé de préférence en le serrant et/ou pour effectuer un mouvement qui est plus lent par rapport au plant de tabac au niveau des points de guidage que le mouvement du plant de tabac vers la machine à récolter, sachant que le guide comprend notamment à gauche et à droite du plant de tabac par rapport au sens d'avancement au moins une courroie s'étendant horizontalement qui est tendue généralement parallèlement à la direction d'avancement entre au moins deux poulies de renvoi montées sur un axe généralement vertical et/ou incliné conformément à l'inclinaison des feuilles, sachant que les poulies de renvoi avant sont conçues pour tourner dans des sens opposés de part et d'autre du plant de tabac et sont de préférence décalées l'une par rapport à l'autre du tiers ou du quart de la distance qui sépare deux plants.

3. Machine à récolter le tabac dont le guide est dimensionné de manière à pouvoir saisir simultanément au maximum deux plants de tabac qui se suivent dans une rangée.

4. Machine à récolter le tabac selon l'une des revendications précédentes dont le guide, le dispositif de détachage et le dispositif de prérécolte disposés de chaque côté sont fixés sur un cadre commun et dont le dispositif de détachage comprend, sur chaque côté de guidage, au moins un cylindre rotatif fixé de manière articulée de préférence à l'avant du cadre par rapport au sens d'avancement et précontraint par rapport au plant de tabac, qui possède sur sa surface latérale une racle de préférence large et s'étendant en biais, ainsi qu'un dispositif d'entraînement afin de tourner partiellement autour du plant de tabac tout en avançant dans le sens d'avancement en tournant sur lui-même, sachant qu'un galet de roulement prenant appui sur le plant de tabac est de préférence prévu de façon coaxiale au cylindre rotatif.

5. Machine à récolter le tabac selon l'une des revendications précédentes dont le dispositif de prérécolte comprend une roue rotative portant des doigts de raclage faisant saillie en étoile, qui, sur l'un des côtés, est suspendue de façon à être mobile axialement, notamment de manière à faire ressort vers l'avant et vers l'arrière et/ou à pivoter transversalement à la direction d'avancement et en étant au repos positionnée notamment au centre devant l'entrée du guide et/ou est inclinée notamment avec un angle compris entre 20° et 35° par rapport à la direction d'avancement et avec un angle compris entre 40° et 50° par rapport au sol.

6. Machine à récolter le tabac selon la revendication précédente, dont le dispositif de prérécolte comporte de l'autre côté une seconde roue rotative qui est de préférence également inclinée avec un angle compris entre 30° et 45° par rapport à la direction d'avancement et avec un angle compris entre 20° et 35° par rapport au sol.

7. Machine à récolter le tabac selon l'une des revendications précédentes, comprenant un dispositif d'entraînement actionné notamment en fonction de la distance au moins pour la roue portant des doigts de raclage et de préférence également pour le dispositif de détachage, qui est doté notamment d'une multiplication par engrenage permettant à la roue munie de doigts de raclage de tourner entre 1,2 et 1,6 fois, notamment environ 1,4 fois plus rapidement que la vitesse d'avancement de la machine sur le sol.

8. Machine à récolter le tabac selon l'une des revendications précédentes, dont les deux cadres sont suspendus en étant mutuellement précontraints de manière à balancer et/ou à être réglables en hauteur et peuvent être inclinés de préférence ensemble de manière à pouvoir les adapter à une inclinaison du sol et/ou à une inclinaison générale d'une rangée de plants de tabac transversalement à la direction d'avancement.

9. Machine à récolter le tabac selon l'une des revendications précédentes, comprenant dès doubles bandes s'étendant vers le haut pour transporter vers le haut des feuilles de tabac détachées de part et d'autre de la direction d'avancement, sachant que les cylindres rotatifs du dispositif détachant les feuilles de tabac de préférence vers le bas présentent à leur extrémité inférieure une couronne de brosses dont les poils tournent contre une entrée du dispositif de transport vers le haut pour des feuilles détachées et que, également de préférence, les dispositifs de transport vers le haut peuvent s'écarter latéralement au-dessus de la pointe des plants afin d'assurer une sortie largement inchangée lorsque le cadre est déplacé en hauteur et/ou sachant qu'au dispositif de transport vers le haut sont associés des cylindres d'orientation verticaux situés du côté de l'entrée afin de donner aux feuilles de tabac pendant la prérécolte une orientation souhaitée et/ou qu'un sas d'entrée effectuant un liage préalable des feuilles est associé du côté de l'rentrée au dispositif de transport vers le haut et/ou qu'un frein de feuilles de préférence commandé par frottement est prévu du côté de la sortie afin de décharger par paquets les feuilles de tabac récoltées dans un réceptacle, notamment une bande en toile se dévidant d'un rouleau au fur et à mesure qu'elle se remplit.

10. Procédé pour récolter des feuilles sur une hauteur de récolte prédéfinie du plant, **caractérisé en ce que** l'on récolte toutes les feuilles sur une première partie de la hauteur de récolte du plant dégagé, **en ce que** l'on saisit de manière élastique le plant par cette première partie à l'aide de deux guides allongés se déplaçant tout au plus lentement par rapport au plant, et **en ce que** l'on détache ensuite toutes les feuilles de la seconde partie de la hauteur du plant située sous les guides à l'aide d'un dispositif de détachage tournant autour du plant tout en effectuant une rotation autour de son propre axe vertical.

11. Procédé pour récolter des feuilles selon la revendication précédente, selon lequel on détache les feuilles d'une première partie de la hauteur de récolte du plant au cours d'un premier passage de la machine à récolter, et on détache les feuilles de la partie de la hauteur de récolte restante en un ou plusieurs passages supplémentaires et/ou selon lequel les guides et/ou les axes verticaux du dispositif de détachage rotatif se stabilisent conformément aux directions d'inclinaison générales d'une rangée de plants, sachant que les plants sont notamment des plants de tabac.
